Europäisches Patentamt

European Patent Office

Office européen des brevets

(19)

(11) Veröffentlichungsnummer : **0 111 511**
**B1**

(12) **EUROPÄISCHE PATENTSCHRIFT**

(45) Veröffentlichungstag der Patentschrift :
09.10.85

(21) Anmeldenummer : 83901795.1

(22) Anmeldetag : 08.06.83

(86) Internationale Anmeldenummer :
PCT/AT 83/00016

(87) Internationale Veröffentlichungsnummer :
WO/8304396 (22.12.83 Gazette 83/29)

(51) Int. Cl.⁴ : **B 60 B 39/04**

(54) EINRICHTUNG FÜR KRAFTFAHRZEUGE ZUM STREUEN VON SAND.

(30) Priorität : 11.06.82 AT 2268/82

(43) Veröffentlichungstag der Anmeldung :
27.06.84 Patentblatt 84/26

(45) Bekanntmachung des Hinweises auf die Patenterteilung : 09.10.85 Patentblatt 85/41

(84) Benannte Vertragsstaaten :
BE CH DE FR GB LI LU NL SE

(56) Entgegenhaltungen :
FR-A- 853 314
GB-A- 16 023
GB-A- 388 059
US-A- 1 669 408
US-A- 1 818 815
US-A- 3 885 823
US-A- 3 888 524
US-A- 3 938 835

(73) Patentinhaber : CERVINKA, Franz
Oberleitenweg 35
A-6370 Kitzbühel (AT)

(72) Erfinder : CERVINKA, Franz
Oberleitenweg 35
A-6370 Kitzbühel (AT)

(74) Vertreter : Hofinger, Engelbert et al
Torggler-Hofinger Wilhelm-Greil-Strasse 16
A-6020 Innsbruck (AT)

Jouve, 18, rue St-Denis, 75001 Paris, France

## Beschreibung

Die Erfindung bezieht sich auf eine Einrichtung für Kraftfahrzeuge zum Streuen von Sand unter Schwerkrafteinwirkung, mit mindestens einem nachfüllbaren Sandbehälter, mit einem Streukanal, dessen einem Rad des Kraftfahrzeuges zugeordnetes Ende eine Streudüse bildet, und mit zwei den Sandfluß unterbrechenden Absperreinrichtungen, von denen die erste dem Auslauf des Sandbehälters zugeordnet ist und die zweite den Verschluß der Streudüse bildet, und deren Betätigung in Abhängigkeit voneinander erfolgt.

Eine Sandstreueinrichtung dieser Art ist beispielsweise der US-A-3 888 524 zu entnehmen. Hier ist in den Streukanal ein Zwischenbehälter eingesetzt, und die beiden Absperreinrichtungen öffnen und schließen wechselweise den Zulauf und den Auslauf des Zwischenbehälters, der die Streudüse bildet. Die beiden Absperreinrichtungen sind hiezu an einem gemeinsamen, im Zwischenbehälter verschiebbaren Träger angeordnet, dessen Bewegung mittels eines Druckmediums, eines Seilzugs od. dgl. erfolgt. Auf der den Auslauf verschließenden Absperreinrichtung liegt daher im verschlossenen Zustand eine Sandmenge, die das Öffnen des Ventils zumindest erschwert. Von unten gegebenenfalls eindringende Feuchtigkeit kann bei Kälte den Sand festfrieren lassen, sodaß die Sandstreueinrichtung funktionslos wird. Aber auch das Schließen der Auslaufabsperreinrichtung kann durch den während der Schließbewegung auf Grund der gleichzeitigen Öffnung der Einlaufabsperreinrichtung nachfließenden Sandes gestört sein.

Die Erfindung hat es sich nun zur Aufgabe gestellt, eine Einrichtung der eingangs genannten Art so zu verbessern, daß jederzeit eine Sandstreuung gewährleistet ist, und die streudüsenseitige Absperreinrichtung ohne Störungen funktionsfähig bleibt.

Erfindungsgemäß wird dies nun dadurch gelöst, daß beide Absperreinrichtungen gleichzeitig öffnen und daß die erste Absperreinrichtung am Auslauf des Sandbehälters früher schließt als die zweite Absperreinrichtung an der Streudüse.

Nach dem erfindungsgemäßen Vorschlag wird die bisherige Doppelfunktion des Streudüsenverschlusses, nämlich den Sand im Behälter zurückzuhalten und den Streuauslaß gegen Schmutz und Nässe zu schützen, auf die beiden Absperreinrichtungen aufgeteilt. Die Absperreinrichtungen des Sandbehälters hält wie üblich den Sand im Behälter zurück. Da sie jedoch früher schließt als der Streudüsenverschluß, wird der im Streukanal befindliche Sand noch ausgestreut und es entleert sich der Streukanal vollständig, bevor die Absperreinrichtung der Streudüse schließt. Der Streudüsenverschluß hat daher eine bloße Schutzfunktion gegen Nässe und Schmutz, so daß an der Innenseite der Streudüsenabsperreinrichtung kein Sand festfrieren kann und bei Verwendung von Splitt als Streugut auch kein Streugut sich im Streukanal und im Streudüsenbereich verklemmen kann. Anderseits ist durch den Verschluß des leeren Streukanals auch der Behälterverschluß selbst gegen Nässe geschützt, sodaß auch hier und im Streubehälter die Gefahr des Einfrierens des Sandes vermieden wird. Die erste Absperreinrichtung läßt sich dadurch jederzeit öffnen und der Sand bleibt streufähig. Da bei Bedarf eine sehr rasche Ausstreuung des Sandes vor die Räder des Fahrzeuges erfolgen muß, öffnen sich beide Absperreinrichtungen gleichzeitig, wodurch der Sand unmittelbar aus dem Sandbehälter auf die Fahrbahn gelangt.

In einer Ausführung der Erfindung ist vorgesehen, daß der Auslauf des Sandbehälters in eine trichterartige Erweiterung des Streukanals eingreift, innerhalb der die erste Absperreinrichtung bewegbar ist. Die Konstruktion läßt sich dadurch etwas vereinfachen, da bei dieser Ausführung die beiden Absperreinrichtungen zu Beginn und Ende des Streukanals vorgesehen sind. Vorzugsweise sind beide Absperreinrichtungen durch Klappen gebildet, die um Drehachsen schwenkbar sind und in der Fließrichtung des Sandes öffnen.

In einer bevorzugten Ausführung ist weiters vorgesehen, daß von den Drehachsen jeder der beiden Klappen ein Hebel radial absteht, an dem ein gesteuert verschiebbares Betätigungselement angreift. Zur Bewegung des Hebels ist als Betätigungselement vorzugsweise ein druckmittelbeaufschlagter und durch ein Magnetventil gesteuerter Kolben vorgesehen. Da sowohl ein Druckmedium als auch elektrische Energie ohnedies in jedem Kraftfahrzeug zur Verfügung steht, sind außer den entsprechenden Anschlüssen keine zusätzlichen Einrichtungen erforderlich. Das Betätigungselement kann weiters auch Teil eines Hubmagneten sein, wobei beispielsweise das Stromversorgungskabel an den Zigarettenanzünder des Kraftfahrzeuges ansteckbar ist. Einangebautes Verzögerungsrelais kann in diesem Fall für die verzögerte Schließbewegung der Streudüsenklappe vorgesehen sein.

Die Betätigung des Hebels kann jedoch auch in anderer Weise, beispielsweise über einen Seilzug od. dgl. erfolgen.

Für Kraftfahrzeuge mit Zwillingsrädern kann jedem Rand eine eigene Streudüse zugeordnet sein. Hierzu sieht eine weitere Ausführung der Erfindung vor, daß der Sandbehälter zwei trichterartige, durch erste Klappen verschließbare Ausläufe aufweist, von denen jeder in einen Streukanal übergeht, der eine durch eine zweite Klappe verschließbare Streudüse aufweist, wobei die ersten und zweiten Klappen paarweise betätigbar angeordnet sind. Nach dieser Ausführung sind die beiden Klappen jeweils an den beiden Enden der Drehachse angeordnet, von der im Mittelteil der Hebel absteht, der mit dem gemeinsamen Betätigungselement zusammenwirkt.

Es ist weiters auch möglich, daß der Sandbehälter mit einem Auslauf so ausgeführt wird, daß zur Verwendung an Zwillingsrädern zwei Sandbehälter aneinander anbaubar sind, sodaß eine zweite Ausführung für Zwillingsräder erübrigt wird. Im übrigen kann natürlich auch Zwillingsrädern ein einziger Auslauf mittig zugeordnet werden.

Nachstehend wird nun die Erfindung anhand der Figuren der beiliegenden Zeichnungen näher beschrieben, ohne darauf beschränkt zu sein.

Es zeigen :

Figur 1 eine Vorderansicht eines Laftkraftwagens mit zwei (vier) an der vorderen Stoßstange montierten, schematisch dargestellten Sandstreueinrichtungen,

Figur 2 eine schematische Seitenansicht von Fig. 1,

Figur 3 einen Vertikalschnitt durch einen trichterförmigen Auslauf eines Sandbehälters gemäß der Linie III-III der Fig. 4,

Figur 4 einen Schnitt nach der Linie IV-IV der Fig. 3,

Figur 5 einen Vertikalschnitt durch eine Streudüse,

Figur 6 im Schnitt nach der Linie IV-IV der Fig. 3 einer Ausführung für Zwillingsreifen, und

Figur 7 eine Vorderansicht der Streudüsen für Zwillingsreifen mit abgenommener Gehäusevorderwand, wobei Fig. 5 auch ein Schnitt nach der Linie V-V der Fig. 7 ist.

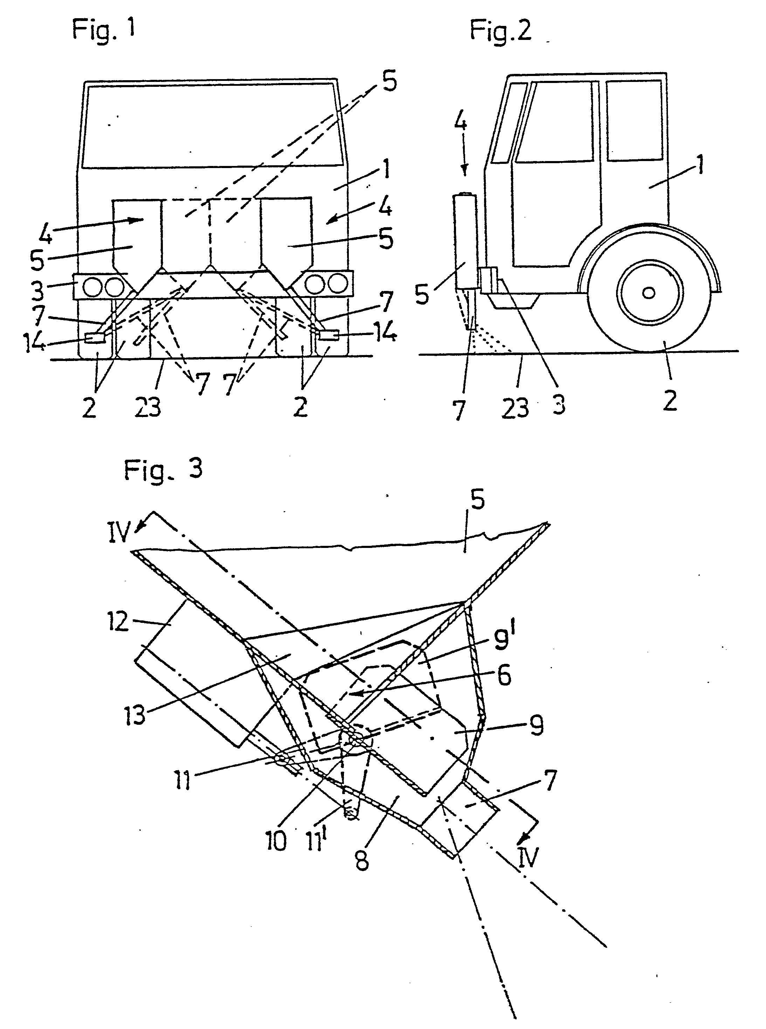

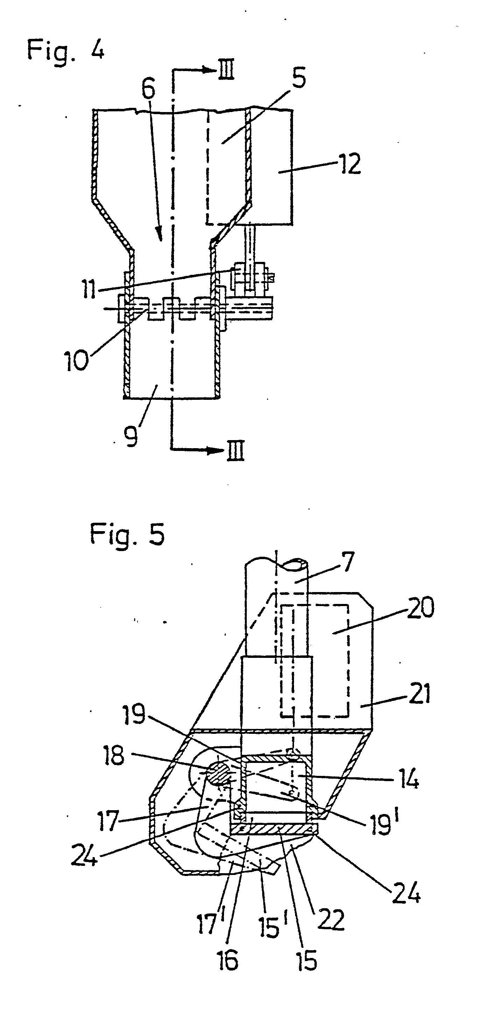

Eine erfindungsgemäße Sandstreueinrichtung 4 ist insbesondere zur zeitweiligen Montage an der Stoßstange 3 eines Kraftfahrzeuges 1, beispielsweise an der Vorderseite eines Lastkraftwagens oder Autobusses ausgebildet. Bevorzugt werden zwei Sandstreueinrichtungen 4 symmetrisch auf dem Fahrzeug 1 vorgesehen, wie Fig. 1 zeigt. Jede Sandstreueinrichtung 4 umfaßt einen Sandbehälter 5, zumindest einen Streukanal 7, und pro Streukanal eine Streudüse 14. Im gezeigten Ausführungsbeispiel führt von jedem Sandbehälter 5 ein Streukanal 7 zur Streudüse 14 vor einem Rad 2. Handelt es sich um Zwillingsräder, so kann pro Radpaar ein zweiter strichliert angedeuteter Sandbehälter 5 angebaut sein, bzw. auch ein Sandbehälter eingesetzt werden, der mit zwei Streukanälen 7 versehen ist, wobei dann jedem Rad des Radpaares eine eigene Streudüse 14 zugeordnet ist. Gegebenenfalls kann für Zwillingsräder auch ein einziger Sandbehälter 5 mit einem Streukanal 7 eingesetzt werden, wenn dessen Streudüse 14 etwa mittig vor dem Radpaar angeordnet wird. Aus jeder Streudüse 14 wird Sand vor oder hinter das Rad 2 auf die Fahrbahn 23 gestreut. Wir vor allem aus Fig. 3 und 4 ersichtlich, weist jeder Sandbehälter 5 nun zumindest einen trichterförmigen Auslauf 6 auf, der durch eine erste Klappe 9 verschließbar ist. Die erste Klappe 9 ist auf einer Drehachse 10 befestigt, von der radial ein Hebel 11 absteht. Am Ende des Hebels 11 greift ein erstes Betätigungselement 12 an, sodaß die erste Klappe 9 aus der mit ausgezogenen Linien in Fig. 3 gezeigten Offenstellung in die mit strichlierten Linien gezeigte Schließstellung (9', 11') verschwenkbar ist. Das Betätigungselement 12 ist an der Außenseite des Sandbehälters 5 nahe dem Auslauf 6 befestigt, und beispielsweise durch einen Druckmittelzylinder mit einem durch ein Magnetventil gesteuerten Kolben oder durch einen Hubmagneten gebildet. Der Streukanal 7 weist eine trichterförmige Erweiterung 8 auf, innerhalb der die sich bewegende erste Klappe 9 angeordnet ist. Den Auslauf 6 und die Erweiterung 8 des Streukanals 7 umgibt noch eine nicht gezeigte Wandung oder Hülle, um das Eindringen von Schmutz und Nässe in die erste Klappe 9 bzw. die Erweiterung 8 zuverhindern.

Fig. 5 zeigt den Streudüsenbereich der erfindungsgemäßen Sandstreueinrichtung 4 in einem Vertikalschnitt durch die Streudüse 14, die am Ende des Streukanals 7 angeordnet und durch eine zweite Klappe 15 verschließbar ist. Zwischen dem Öffnungsrand der Streudüse 14 und der Klappe 15 ist eine Dichtung 16 eingesetzt. Der Randbereich der Streudüse 14, der Anlagebereich der Klappe 15, und/oder die Dichtung 15 sind vorzugsweise elektrisch beheizt. Entsprechende Heizdrähte 24 sind diesfalls an oder in diesen Bereichen angeordnet. Die Streudüse 14 ist in einem Gehäuse 21 untergebracht, aus dem nach oben der Streukanal 7 vorragt. Im Bereich der zweiten Klappe 15 ist eine Öffnung im Gehäuse 21 vorgesehen, die von einer Gummischürze 22 od. dgl. umhüllt bzw. verschlossen ist, die die Öffnung jedoch durch das Öffnen der zweiten Klappe 15 freigibt, sodaß Sand aus der Streudüse 14 ausrinnen kann. Die zweite Klappe 15 ist an Schwenkhebeln 17 befestigt, die auf einer Drehachse 18 verdrehfest angeordnet sind. Die Drehachse 18 ist seitlich an der Streudüse 14 drehbar gelagert und mit einem radial abstehenden Hebel 19 versehen, der mit einem zweiten Betätigungselement 20 zusammenwirkt. Dieses, bevorzugt gleich dem ersten Betätigungselement 12 ausgebildet, verschwenkt daher die zweite Klappe 15 (Offenstellung 15', 17', 19').

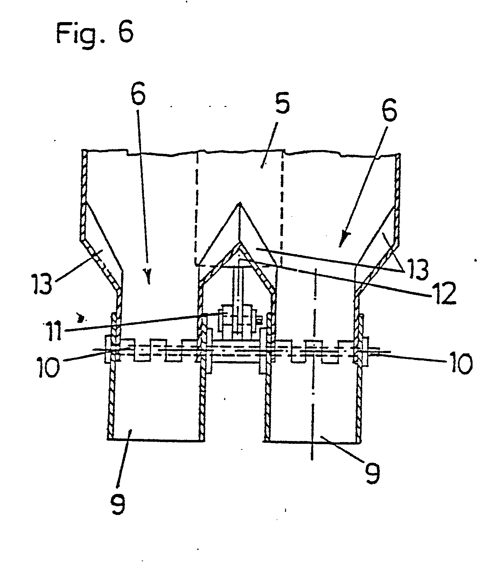

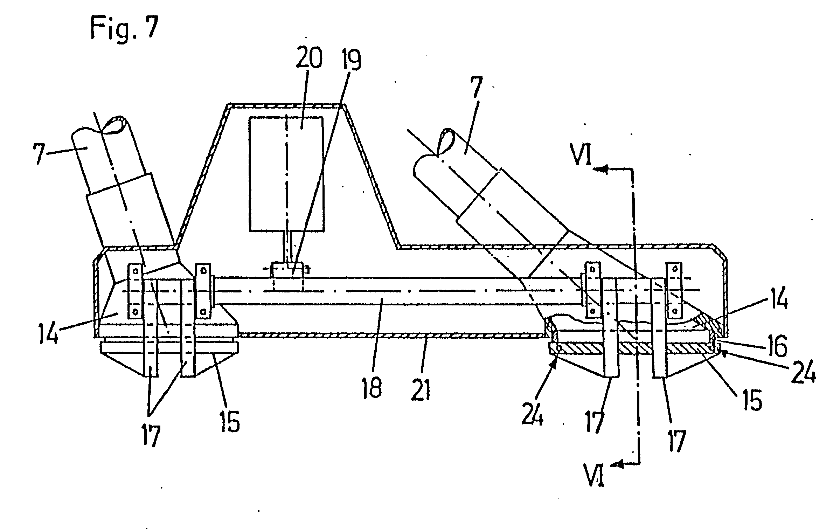

Die Ausführung nach Fig. 6 und 7 zeigt die in Fig. 1 und 2 strichliert angeordneten Sandbehälter 5 mit zwei Streukanälen 7 für Zwillingsräder im Detail, wobei Fig. 6 der Darstellung nach Fig. 4 entspricht. Der Sandbehälter 5 weist hier zwei Ausläufe 6 auf. Diese sind durch erste Klappen 9 gemeinsam verschließbar, und zu diesem Zweck auf den beiden Enden einer gemeinsamen Drehachse 10 befestigt, wobei der Hebel 11 etwa mittig zwischen den ersten Klappen 9 angeordnet ist. Zur Bildung der beiden trichterförmigen Ausläufe 6 sind im Sandbehälter 5 Schrägflächen 13 ausgebildet. Im Streudüsenbereich (Fig. 7) enden die beiden Streukanäle 7 in gleicher Höhe über der Fahrbahn 23 (Fig. 2). Die zweiten Klappen 15 der beiden Streudüsen 14 sind daher ebenfalls auf einer gemeinsamen Drehachse 18 angeordnet, an deren Mittelteil der Hebel 19 absteht. Er wird wiederum von einem Betätigungselement 20 in Drehung versetzt. Beim Einschalten der Sandstreueinrichtung 4, beispielsweise durch Betätigung eines Schalters am Armaturenbrett bzw. einem anderen vom Fahrer leicht erreichbaren Bereich des Fahrzeuges 1 bewegen die ersten Betätigunselemente 12 alle ersten Klappen der Sandbehälter 5 aus der geschlossenen Stellung nach Fig. 3. Gleichzeitig werden durch die zweiten Betätigungselemente 20 alle zweiten Klappen 15 der Streudüsen geöffnet (offene Stellung 15'), sodaß Sand ohne Verzögerung aus den Sandbehältern 5 auf die Fahrbahn gelangt. Dies ist wichtig, da besonders bei plötzlich auftretendem Glatteis die Streuung möglichst bereits mit dem Erkennen der Gefahr einsetzen sollte. Eine vorzeitige Öffnung der zweiten Klappen 15 würde die Gefahr des Eindringens von Nässe oder Schmutz in die Streudüsen 14 mit sich bringen, und ein vorzeitiges Öffnen bzw. Offenhalten der ersten Klappen 9 der Sandbehälter 5 würde die Streukanäle 7 mit Sand füllen, der sich darin verfestigen bzw. festfrieren könnte. Aus diesen Gründen müssen die Streukanäle 7 bei Nichtgebrauch entleert sein. Es werden daher die Klappen 9 und 15 nicht gleichzeitig, sondern in kurzem Abstand nacheinander geschlossen. Die Betätigung des Schalters bewirkt daher zuerst eine Schließung der ersten Klappen 9 (Fig. 3) und erst nach der Entleerung der Sandreste aus den Streukanälen 7 die Schließung der zweiten Klappen 15 (Fig. 6). Die Verzögerung erfolgt beispielsweise mittels eines Verzögerungsrelais, das die Magnetventile oder Hubmagneten der zweiten Betätigungseinrichtungen erst nach einer kurzen Zeit ansprechen läßt. Auf diese Weise wird die vollständige Entleerung der Streukanäle 7 einerseits und andererseits deren Schutz gegen Spritzwasser, Feuchtigkeit, Nässe und Schmutz in bestmöglicher Weise erzielt. Bei vollständiger Entleerung des Streukanals 7 und des Streudüsenbereichs wird auch der Gefahr des Verklemmens der Streudüsenklappe 15 begegnet.

**Patentansprüche**

1. Einrichtung für Kraftfahrzeuge zum Streuen von Sand unter Schwerkrafteinwirkung, mit mindestens einem nachfüllbaren Sandbehälter (5), mit einem Streukanal (7), dessen einem Rad des Kraftfahrzeuges zugeordnetes Ende eine Streudüse (14) bildet, und mit zwei den Sandfluß unterbrechenden Absperreinrichtungen (9, 15), von denen die erste dem Auslauf des Sandbehälters zugeordnet ist und die zweite den Verschluß der Streudüse bildet, und deren Betätigung in Abhängigkeit voneinander erfolgt, dadurch gekennzeichnet, daß beide Absperreinrichtungen gleichzeitig öffnen und daß die erste Absperreinrichtung am Auslauf (6) des Sandbehälters (5) früher schließt als die zweite Absperreinrichtung an der Streudüse (14).

2. Einrichtung nach Anspruch 1, dadurch gekennzeichnet, daß der Auslauf (6) des Sandbehälters (5) in eine trichterartige Erweiterung (8) des Streukanals (7) eingreift, innerhalb die erste Absperreinrichtung bewegbar ist.

3. Einrichtung nach Anspruch 1, dadurch gekennzeichnet, daß beide Absperreinrichtungen durch um Drehachsen (10, 18) schwenkbare Klappen (9, 15) gebildet sind, die jeweils in der Fließrichtung des Sandes öffnen.

4. Einrichtung nach Anspruch 3, dadurch gekennzeichnet, daß von den Drehachsen (10, 18) jeder der beiden Klappen (9, 15) ein Hebel (11, 19) radial absteht, an dem ein gesteuert verschiebbares Betätigungselement (12, 20) angreift.

5. Einrichtung nach Anspruch 4, dadurch gekennzeichnet, daß das Betätigungselement (12, 20) ein druckmittelbeaufschlagter und durch ein Magnetventil gesteuerter Kolben ist.

6. Einrichtung nach Anspruch 5, dadurch gekennzeichnet, daß das Betätigungselement (12, 20) Teil eines Hubmagneten ist.

7. Einrichtung nach Anspruch 1, für Kraftfahrzeuge mit Zwillingsrädern, dadurch gekennzeichnet, daß der Sandbehälter (5) zwei trichterartige, durch erste Klappen (9) verschließbare Ausläufe (6) aufweist, von denen jeder in einen Streukanal (7) übergeht, der eine durch eine zweite Klappe (15) verschließbare Streudüse (14) aufweist, wobei die ersten und zweiten Klappen (9, 15) paarweise betätigbar angeordnet sind.


**Claims**

1. Device for motor vehicles for dispensing sand under the effect of gravity, comprising at least one refillable sand container (5), a sand channel (7) whose end associated with a wheel of the motor vehicle forms a sand outlet (14), and comprising two closing members (9, 15) interrupting the sand flow, the first of said members being associated with the outlet of the sand container, and the second one forming the sealing of the sand outlet, and their actuation being dependent upon each other, characterized in that both closing members open simultaneously and that the first closing member at the outlet (6) of the sand container (5) closes earlier than the second closing member at the sand outlet (14).

2. Device according to claim 1, characterized in that the outlet (6) of the sand container (5) engages in a funnel-like widened portion (8) of the sand channel (7) in which the first closing member is movable.

3. Device according to claim 1, characterized in that both closing members are formed by flaps (9, 15) pivotable about swivelling axles (10, 18) and opening in the flow direction of the sand.

4. Device according to claim 3, characterized in that a lever (11, 19), on which a controlled moveable actuating element (12, 20) engages, projects radially from the swivelling axles (10, 18) of each of the two flaps (9, 15).

5. Device according to claim 4, characterized in that the actuating element (12, 20) is a piston which is acted upon by a pressure medium and controlled by a solenoid valve.

6. Device according to claim 5, characterized in that the acutating element (12, 20) is part of a lifting magnet.

7. Device according to claim 1, for motor vehicles with twin wheels, characterized in that the sand container (5) has two funnel-like outlets (6) closable by first flaps (9), each of said outlets ending in a sand channel (7) having a sand outlet (14) closable by a second flap (15), the first and the second flaps (9, 15) being arranged to be actuated in pairs.

**Revendications**

1. Dispositif pour véhicules automobiles pour l'épandage de sable sous l'action de la gravité, muni d'au moins un réservoir à sable (5) pouvant être rempli, d'un conduit d'épandage (7) dont l'extrémité adjointe à une roue du véhicule automobile forme une buse d'épandage (14) et de deux dispositifs de fermeture (9, 15) interrompant l'écoulement de sable, dont le premier est adjoint à la sortie du récipient à sable et le deuxième forme l'obturateur de la buse d'épandage et dont l'actionnement s'effectue sous la dépendance l'un de l'autre, caractérisé par le fait que les deux dispositifs de fermeture s'ouvrent simultanément et que le premier dispositif de fermeture, à la sortie (6) du récipient à sable (5), se ferme plus tôt que le deuxième dispositif de fermeture, sur la buse d'épandage (14).

2. Dispositif selon la revendication 1, caractérisé par le fait que la sortie (6) du récipient à sable (5) s'engage dans un élargissement en forme d'entonnoir (8) du conduit d'épandage (7), à l'intérieur duquel le premier dispositif de fermeture peut se mouvoir.

3. Dispositif selon la revendication 1, caractérisé par le fait que les deux dispositifs de fermeture sont constitués de volets (9, 15) pouvant pivoter autour d'axes de rotation et qui s'ouvrent chacun dans le sens d'écoulement du sable.

4. Dispositif selon la revendication 3, caractérisé par le fait que, des axes de rotation (10, 18) de chacun des deux volets (9, 15), s'écarte radialement un levier (11, 19) auquel s'applique un élément d'actionnement (12, 20) pouvant coulisser de façon commandée.

5. Dispositif selon la revendication 4, caractérisé par le fait que l'élément d'actionnement (12, 20) est un piston soumis à l'action d'un agent de pression et commandé par une électrovalve.

6. Dispositif selon la revendication 5, caractérisé par le fait que l'élément d'actionnement (12, 20) fait partie d'un aimant de levage.

7. Dispositif selon la revendication 1, pour véhicules automobiles à roues jumelées, caractérisé par le fait que le récipient à sable (5) présente deux sorties en forme d'entonnoir (6) pouvant être fermées par des premiers volets (9) et dont chacune se continue par un conduit d'épandage (7) qui présente une buse d'épandage (14) pouvant être fermée par un deuxième volet (15), les premier et deuxième volets (9, 15) étant disposés de manière à pouvoir être actionnés par paires.

Fig. 1

Fig.2

Fig. 3

Fig. 4

Fig. 5

Fig. 6

Fig. 7

0 111 511